Europäisches Patentamt

European Patent Office

Office européen des brevets

(11) Veröffentlichungsnummer: **0 036 474**
**A2**

# (12) EUROPÄISCHE PATENTANMELDUNG

(21) Anmeldenummer: **81100479.5**

(22) Anmeldetag: **23.01.81**

(51) Int. Cl.³: **F 16 L 58/14, F 27 D 1/06**

(30) Priorität: **24.03.80 DE 3011310**

(43) Veröffentlichungstag der Anmeldung: **30.09.81**
**Patentblatt 81/39**

(84) Benannte Vertragsstaaten: **AT BE FR GB IT LU NL SE**

(71) Anmelder: **Karrena GmbH, Rüdigerstrasse 20,
D-4000 Düsseldorf 30 (DE)**

(72) Erfinder: **Keymis, Helmut, Kanzlerstrasse 14,
D-4000 Düsseldorf 30 (DE)**
Erfinder: **Wiessner, Hans-Jörg, Kanzlerstrasse 14,
D-4000 Düsseldorf 30 (DE)**

(74) Vertreter: **Meyer, Alfred, Dipl.-Ing. Dr. jur.,
Schwanenmarkt 10, D-4000 Düsseldorf 1 (DE)**

(54) **Rohrverkleidung.**

(57) Die Erfindung betrifft eine Rohrverkleidung in Form eines Steinverbandes, der zueinander parallele Rohre (24) umgibt und aus einzelnen Steinlagen aufgebaut ist. Die Steine (10, 22; 32) haben an ihren jeweils einer benachbarten Steinlage zugewandten Seiten eine formschlüssige Verbindung in Umfangsrichtung. Während sich bei einer bekannten Rohrverkleidung die Formschlüssigkeit bei allen Steinlagen über den ganzen Umfang erstreckt und notwendig ist, um die Rohrverkleidung an den Rohren (24) zu halten, soll erfindungsgemäß zumindest ein Teil der Steine (10, 22; 32) an den innerhalb einer Steinlage aneinandergrenzenden Stirnflächen jeweils eine Aussparung (15) aufweisen, in die eine an dem jeweils zugeordneten Rohr (24) befestigte Halterung (26) eingreift. Ferner soll die formschlüssige Verriegelung innerhalb einer Steinlage in Umfangsrichtung unterbrochen sein, so daß hierdurch der Steinverband in Umfangsrichtung eine größere Nachgiebigkeit erhält. Wenn Gewichtsbelastungen auf die Rohre (24) einwirken, wie dies in Wärmebehandlungsöfen der Fall sein kann, ist der Ausgleich von Rohrverformungen besser möglich. Auch lassen sich ganz allgemein Wärmedehnungen besser ausgleichen.

### Rohrverkleidung

Die Erfindung betrifft eine Rohrverkleidung in Form eines
Steinverbandes, der mindestens zwei zueinander parallel
verlaufende Rohre umgibt und aus einzelnen Steinlagen
aufgebaut ist, mit jeweils zwei Anschlägen und einer
zwischen diesen ausgebildeten Vertiefung an den einer
benachbarten Steinlage zugewandten Seiten eines Steines,
mit einer formschlüssigen Verbindung zwischen den Steinen
benachbarter Steinlagen derart, daß jeweils zwei Anschläge benachbarter Steine einer Steinlage in die Vertiefung eines Steins der benachbarten Steinlage eingreifen, wobei zumindest ein Teil der Steine in Umfangsrichtung einen bogenförmigen Verlauf hat.

Bei einer bekannten Rohrverkleidung dieser Art umgeben die einzelnen Steinlagen zwei parallel zueinander
verlaufende Rohre, wobei sie im Bereich zwischen diesen
Rohren entlang einer an den Rohrumfang gelegten Tangente
gradlinig verlaufen. Im kreisförmigen Außenbereich der
Rohre haben die Steine einen entsprechenden bogenförmigen Verlauf. Da jeweils zwei Anschläge an den benachbarten Enden zweier Steine in die Vertiefung eines Steines einer benachbarten Steinlage eingreifen, ist über
den ganzen Umfang der Rohrverkleidung hin eine formschlüssige Verbindung vorhanden. Diese ist unbedingt
erforderlich, um der Rohrverkleidung den erforderlichen
Halt zu geben.

Es ist aber nachteilig, daß aufgrund der über den Umfang
durchgehenden Formschlüssigkeit des Steinverbandes Wärmedehnungen nicht in ausreichendem Maße ausgeglichen werden können. Vielfach treten zusätzlich zu den durch die Wärmedehnungen verursachten Beanspruchungen auch noch Belastungen
auf, die auf äußere mechanische Einflüsse zurückzuführen
sind. In Wärmebehandlungsöfen wie zum Beispiel Hubbalkenöfen, Stoßöfen oder dergleichen dienen die mit einer solchen Rohrverkleidung versehenen Rohre unter anderem auch
als Auflage für das zu behandelnde Gut. Da dieses meist
verhältnismäßig schwer ist, sind auch die auf die Rohre
und ihre Verkleidung ausgeübten Beanspruchungen entsprechend groß. Es hat sich herausgestellt, daß auch diesen
Belastungen eine Rohrverkleidung der bekannten Art nicht
in ausreichendem Maße standhält.

Hiervon ausgehend lag der Erfindung die Aufgabe zugrunde,
mit möglichst einfachen Mitteln eine Rohrverkleidung zu
schaffen, die zum Ausgleich von Wärmedehnungen besonders
geeignet ist und die gleichzeitig konstruktiv so stabil
ist, daß sie auch für durch äußere mechanische Einwirkungen belastete Rohre verwendet werden kann.

Zur Lösung dieser Aufgabe wird für eine solche Rohrverkleidung erfindungsgemäß vorgeschlagen, daß zumindest
ein Teil der Steine an den innerhalb einer Steinlage aneinandergrenzenden Stirnflächen jeweils eine Aussparung
aufweist, in die eine an dem jeweils zugeordneten Rohr
befestigte Halterung eingreift, und daß die formschlüssige Verriegelung der Steine einer Steinlage in Umfangsrichtung an mindestens einer Stelle unterbrochen ist.

Hierdurch erhält die Rohrverkleidung zunächst in Umfangsrichtung ihrer Steinlagen eine größere Elastität, die
einen wesentlich besseren Ausgleich der Wärmedehnungen
ermöglicht. Aber auch dann, wenn die Rohre sich aufgrund äußerer mechanischer Einwirkungen wie zum Beispiel Gewichtsbelastungen zusätzlich bewegen, können diese Bewegungen von einer nach der Erfindung ausgebildeten
Rohrverkleidung jetzt in ausreichendem Maße ausgeglichen
werden, ohne daß die Steine oder eine zwischen diesen und
den Rohren angeordnete Isolierung beschädigt werden. Durch
die an den Steinen angreifenden und an den Rohren befestigten Halterungen erhält die Rohrverkleidung auch dann eine
ausreichende Stabilität, wenn die formschlüssige Verriegelung der Steinlagen in Umfangsrichtung an mindestens
einer Stelle unterbrochen ist. Im übrigen läßt sich die
nach der Erfindung ausgebildete Rohrverkleidung auch mit
Vorteil anwenden, wenn sie zur Ummantelung von mehr als
zwei zu einander parallelen Rohren dienen soll.

Nachfolgend werden einige vorteilhafte Ausgestaltungen
der Erfindung beschrieben, von denen eine darin besteht,
daß die Rohrverkleidung in dem zwischen den Achsen benachbarter Rohre liegenden Bereich einen Zwischenstein
aufweist, daß der Zwischenstein von zwei jeweils an einem
dieser Rohre befestigten Halterungen gehalten ist und daß
die formschlüssige Verriegelung in Umfangsrichtung an mindestens einer Stirnseite des Zwischensteines unterbrochen
ist.

Die Unterbrechung der formschlüssigen Verriegelung in Umfangsrichtung läßt sich im Bereich eines solchen Zwischensteines in besonders günstiger Weise herstellen.
Im allgemeinen wird diese Unterbrechung in dem zwischen
zwei benachbarten Rohren liegenden Bereich an beiden
Seiten der Rohrverkleidung vorhanden sein.

In diesem Zusammenhang wird erfindungsgemäß weiter vorgeschlagen, daß durch die Unterbrechung der formschlüssigen Verriegelung in Umfangsrichtung an mindestens einer
Seite eines Zwischensteines eine benachbarte Steinlagen durchsetzte Fuge gebildet ist, die parallel zu
einer Rohrachse verläuft. Der durchgehende Verlauf
der Fuge ermöglicht zusätzlich zu dem Ausgleich von
Wärmedehnungen gegebenenfalls auch ein Gleiten der
an die Fuge angrenzenden Bereiche der Rohrverkleidung
bei verhältnismäßig starken Rohrbewegungen. An dieser
Stelle werden also niemals Belastungen unmittelbar zwischen den Steinen der Rohrverkleidung übertragen.

Erfindungsgemäß können die zum Eingreifen der Halterungen dienenden Aussparungen an den Stirnseiten der
Steine oder Zwischensteine durch durchgehende Nuten
gebildet sein, die parallel zu einer Rohrachse verlaufen. Dies ermöglicht in günstiger Weise ein lagenweises Aufschieben bzw. Aneinandersetzen der einzelnen
Steine.

Der Zwischenstein kann erfindungsgemäß einen zumindest
angenähert polygonalen Querschnitt haben und in den
zwischen zwei benachbarten Rohren liegenden Umfangsbereichen hineinragen. Dies ermöglicht ein einfaches
Zusammenwirken mit den Halterungen, die sich dann wie
im übrigen Umfangsbereich der Rohre ebenfalls in radialer Richtung erstrecken können. Die Zwischensteine
sollten jedoch nur so weit in den Umfangsbereich hineinragen, daß eine in der Ebene der Rohrachsen verlaufende Fuge freibleibt. Auch im Bereich dieser Fuge
können unterschiedliche Wärmedehnungen ausgeglichen
werden, und bei stärkeren mechanischen Belastungen
ist auch hier ein Gleiten der Steinlagen aneinander
möglich.

Erfindungsgemäß wird weiterhin vorgeschlagen, daß der in den Umfangsbereich zwischen benachbarten Rohren hineinragende Teil des Zwischensteins jeweils so bemessen ist, daß dieser Teil bei einer Annäherung der Rohre aneinander als Distanzstück wirkt.

Bei einer Annäherung der Rohre aneinander können hierdurch Druckbelastungen unmittelbar von dem Zwischenstein aufgenommen werden, die sonst von den Halterungen des Zwischensteines übertragen werden müßten. Diese Halterungen sind somit entsprechend entlastet.

Günstig ist es hierbei erfindungsgemäß ferner, wenn dieser Teil des Zwischensteins so geformt ist, daß bei einer Annäherung der Rohre aneinander die Berührungspunkte zwischen Rohr und Zwischenstein jeweils im Bereich eines Winkels von maximal 45° zu der Rohrachsenebene liegen. Gegebenenfalls auf die Halterungen des Zwischensteins einwirkende Momente können hierdurch vermieden oder zumindest auf einen geringen Wert beschränkt werden.

Zur Ausbildung des Zwischensteins wird weiterhin erfindungsgemäß vorgeschlagen, daß ein Zwischenstein in der parallel zu einer Rohrachse verlaufenden Richtung so lang bemessen ist, wie es der Höhe eines Steines zwischen den Vertiefungen zuzüglich der Höhe eines Anschlages entspricht.

Hierdurch wird erreicht, daß Zwischensteine gleicher Höhe verwendet werden können und daß der durch die Anschläge an den angrenzenden Steinen vorgegebene Fugenverlauf zwischen jeweils zwei Steinlagen an jedem zweiten Zwischenstein mit dem Fugenverlauf der Zwischensteine in Übereinstimmung gebracht wird.

In weiterer Ausgestaltung der Erfindung wird vorgeschlagen, daß nur in einigen der Steinlagen Steine durch an
den Rohren befestigte Halterungen gehalten sind. Die
Rohrverkleidung hat auch dann noch eine ausreichende
Stabilität, wenn die Halterungen zum Beispiel nur an
jeder zweiten oder dritten Steinlage angreifen. Es kann
somit eine entsprechende Anzahl von Halterungen eingespart werden.

Weiterhin ist es erfindungsgemäß denkbar, daß die mit
Anschlägen und Vertiefungen versehenen Steinseiten
Vorsprünge und Nuten aufweisen, die in radialer Richtung
eine formschlüssige Verriegelung bewirken. Hierdurch werden die Dichtigkeit der Rohrverbindung verbessert und
auch der Halt zwischen benachbarten Steinen zweier Steinlagen vergrößert.

Die Halterungen können zum Beispiel die Form eines mit
einem Kopf versehenen Bolzens oder eines am Ende umgebogenen Steges haben. Das Befestigen der Halterungen
wird zweckmäßig durch Schweißung erfolgen. Wenn Stege
verwendet werden, so ist es zweckmäßig, wenn die Stege
jeweils an ihrem Ende geschlitzt und in zwei diametral
entgegengesetzten Richtungen umgebogen sind, so daß sie
zu beiden Seiten hin in jeweils einen Stein oder Zwischenstein eingreifen können.

Es ist im allgemeinen anzustreben, mit einer möglichst
geringen Anzahl unterschiedlicher Steintypen auszukommen.
Zu diesem Zweck wird erfindungsgemäß vorgeschlagen, daß
in einer Steinlage außer den Zwischensteinen nur Steine
mit zwei unterschiedlichen Bogenwinkel-Längen vorhanden sind und daß der längere Stein doppelt so lang ist
wie der kürzere Stein. So kann der längere Stein vorteilhaft einen Bogenwinkel von 120$^O$ umfassen.

Nachfolgend wird eine besonders bevorzugte Ausführungsform der Erfindung anhand einer Zeichnung näher beschrieben. Im einzelnen zeigen:

Figur 1, Figur 2 und Figur 3
    in jeweils perspektivischer Darstellung drei
    unterschiedliche Steintypen;

Figur 4  in perspektivischer Darstellung einen Zwischenstein;

Figur 5  einen Querschnitt durch eine Rohrverkleidung
    entlang der Linie V-V in Figur 7;

Figur 6  einen Querschnitt durch dieselbe Rohrverkleidung entlang der Linie VI-VI in Figur 7;

Figur 7  einen Längsschnitt durch die Rohrverkleidung
    in der Rohrachsenebene;

Figur 8  eine Ansicht der Rohrverkleidung von der Seite;

Figur 9  eine zu der Darstellung nach Figur 8 um 90$^O$
    gedrehte Ansicht der Rohrverkleidung von der
    Schmalseite;

Figur 10 in einer der Figur 5 entsprechenden Darstellung einen Querschnitt durch eine Rohrverkleidung für eine größere Anzahl von Rohren;

Figur 11   in einer der Figur 6 entsprechenden Darstellung einen Querschnitt durch die Rohrverkleidung nach Figur 10.
Figur 12   eine weitere Ausführungsform.
Zunächst soll der Aufbau der einzelnen Steine bzw.
Zwischensteine beschrieben werden.

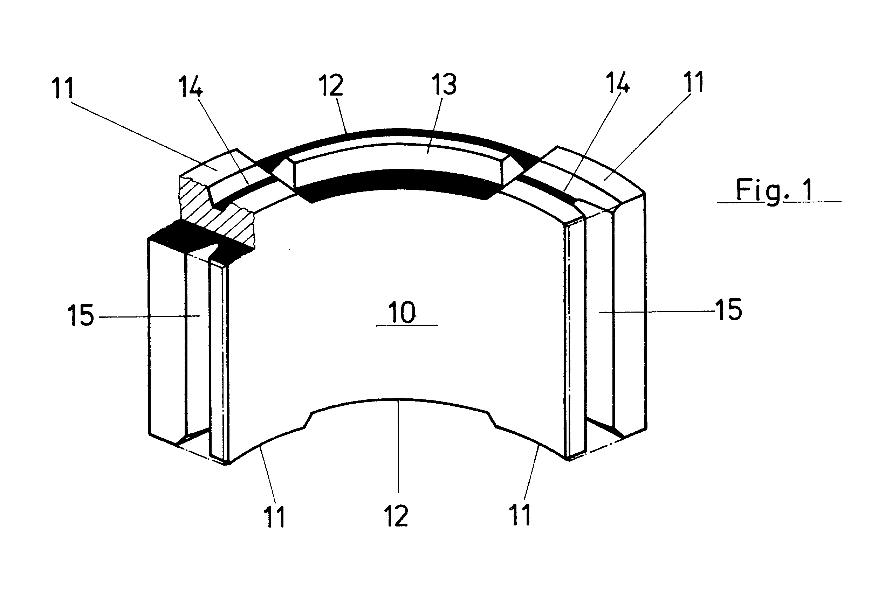

Der in Figur 1 gezeigte Baustein 10 hat einen sich
über 120$^\mathrm{O}$ erstreckenden bogenförmigen Verlauf und ist
an zwei gegenüberliegenden Seiten im Endbereich jeweils
mit einem Anschlag 11 versehen, zwischen dem eine Vertiefung 12 ausgebildet ist. Letztere hat eine Bogenlänge, die doppelt so groß ist wie die Bogenlänge eines
Anschlags 11. Die Vertiefung 12 ist mit einer bogenförmig verlaufenden Feder 13 versehen, während die Anschläge 11 jeweils eine auf gleichem Radius wie die
Feder 13 liegende Nut 14 aufweisen.

Der Stein 10 hat an seinen gegenüberliegenden Stirnflächen jeweils eine Nut 15, die sich in axialer Richtung erstreckt. In Figur 1 ist die linke obere Ecke
des Steines 10 ausgeschnitten, um den Querschnitt der
beiden Nuten 14 und 15 zu zeigen.

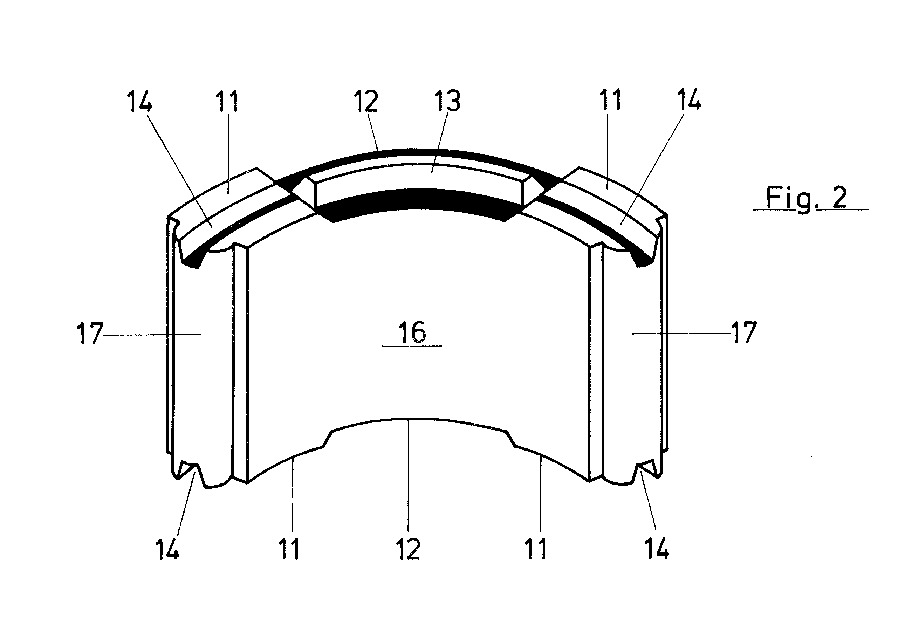

Auch der in Figur 2 dargestellte Stein 16 erstreckt
sich über einen Bogenwinkel von 120$^\mathrm{O}$ und hat an zwei
gegenüberliegenden Seiten ebenfalls eine Vertiefung 12,
die zwischen zwei Anschlägen 11 liegt. Es sind ferner
eine Feder 13 in der Vertiefung 12 und Nuten 14 inden
Anschlägen 11 vorgesehen.

Der Stein 16 unterscheidet sich von dem Stein 10 dadurch, daß er an seinen beiden Stirnflächen eine Feder 17 von etwa halbkreisförmigem Querschnitt aufweist.

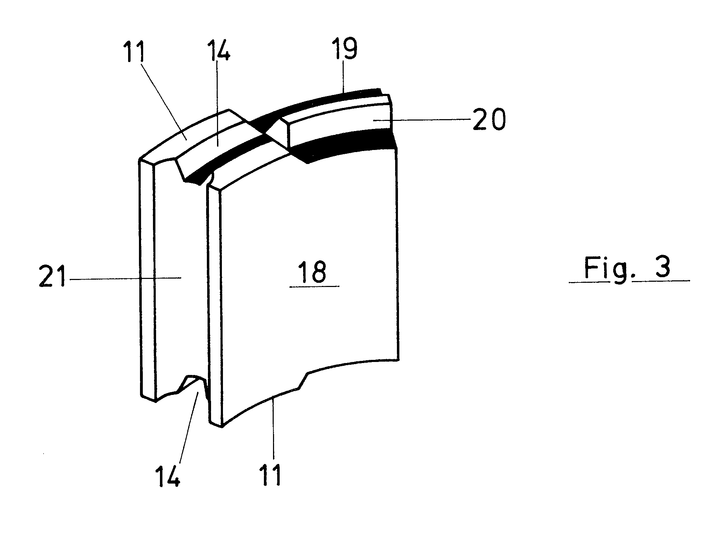

Der in Figur 3 dargestellte Stein 18 erstreckt sich über
einen Bogenwinkel von 60$^O$. An den beiden bogenförmig verlaufenden Seiten hat der Stein 18 jeweils einen Anschlag
11 mit einer Nut 14. Eine Vertiefung 19 ist jedoch nur
halb so lang wie die Vertiefung 12 des Steines 10 oder
des Steines 16. Dasselbe gilt auch für die in der Vertiefung 19 vorgesehene Feder 20.

Der Stein 18 hat nur an der einen Stirnseite eine Nut 21
von etwa halbkreisförmigem Querschnitt, der dem Querschnitt der Feder 17 des Steines 16 angepasst ist. Die
gegenüberliegende Stirnseite ist eben.

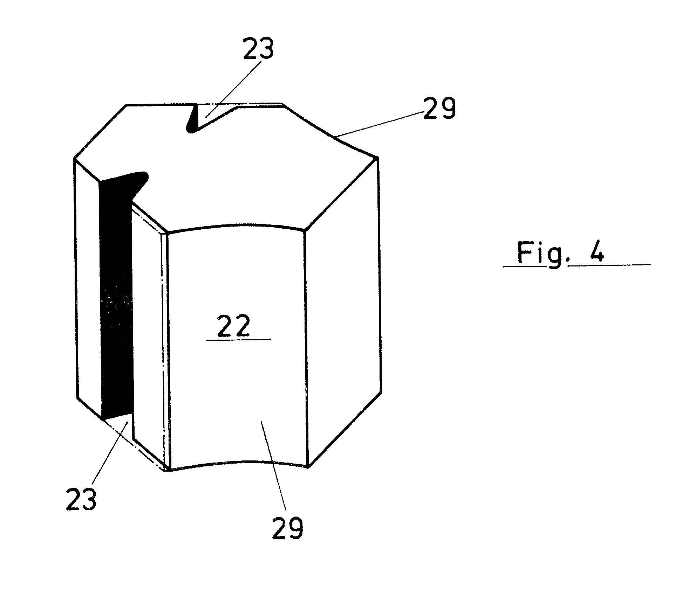

Der in Figur 4 dargestellte Zwischenstein 22 hat einen
polygonalen Querschnitt und zwei gegenüberliegende Nuten
23, deren Querschnitt demjenigen der Nut 15 des Steines
10 entspricht.

Nachfolgend soll jetzt der Aufbau einer Rohrverkleidung
beschrieben werden, die zwei Rohre 24 umgibt. Diese sind
zumindest an einem Teil ihres Umfanges von einer Schicht
25 aus temperaturbeständigem und vorzugsweise weichem
oder elastischen Isoliermaterial umgeben.

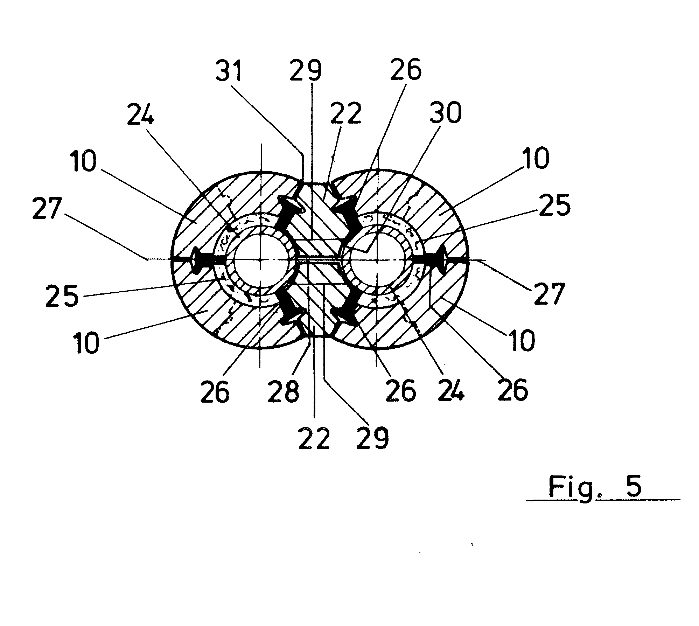

Wie Figur 5 erkennen läßt, sind an jedem der Rohre 24
in gleicher Höhe am Umfang jeweils drei Halterungen 26
angeschweißt, die voneinander einen Winkelabstand von
120$^O$ haben. Die Halterungen 26 sind hier als mit einem
Kopf versehener Bolzen ausgeführt, wobei der Querschnitt
des Kopfes so bemessen ist, daß ein gutes Eingreifen
in die Nuten 15 der Steine 10 und in die Nuten 23 der
Zwischensteine 22 möglich ist.

Die in Figur 5 dargestellte Steinlage setzt sichalso
aus nur zwei Steintypen zusammen.

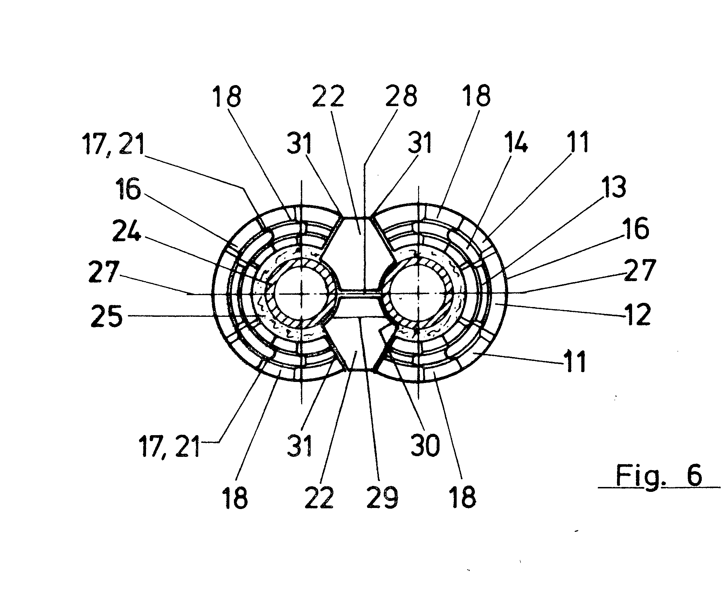

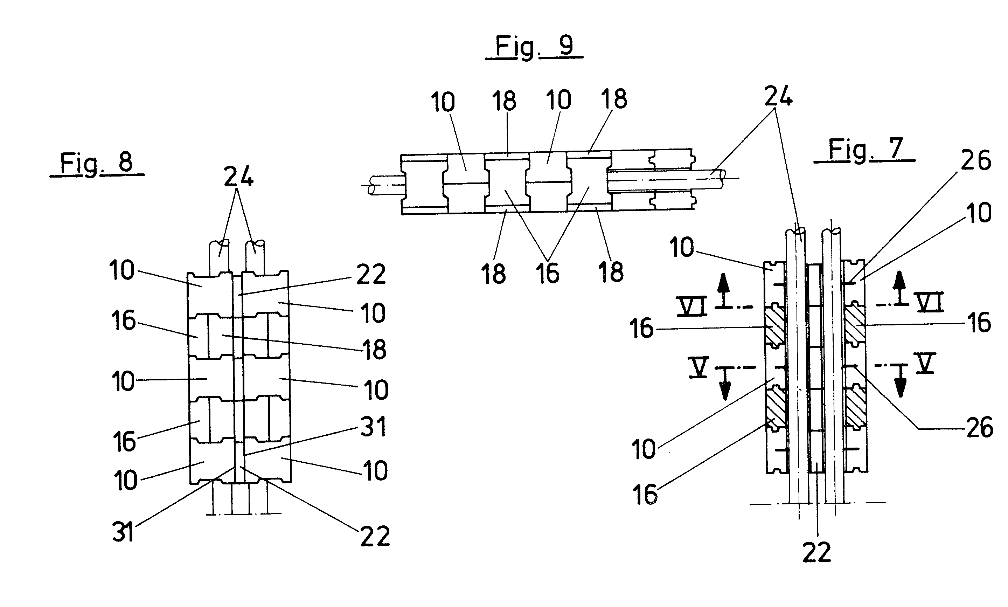

In Figur 6 ist eine zu der Steinlage nach Figur 5 benachbarte Steinlage dargestellt, die nicht unmittelbar
durch Halterungen 26 gehalten ist. Die in Figur 6 gezeigte Steinlage setzt sich aus den $120^O$-Steinen 16
und den $60^O$-Steinen 18 sowie den Zwischensteinen 22
zusammen. Die Zwischensteine 22 sind in dieser Steinlage allein aufgrund ihrer Querschnittsform zwischen
den Steinen 18 gehalten, da sie in der parallel zu den
Achsen der Rohre 24 verlaufenden Richtung weder Vorsprünge noch Vertiefungen haben, die eine formschlüssige
Verriegelung bilden könnten. Die Steine 16 und 18 sind
in radialer Richtung durch die Federn 17 des Steines 16
und die Nuten 21 des Steines 18 miteinander verriegelt.
Die Verriegelung in Umfangsrichtung wird mit Hilfe der
Anschläge 11 an den Steinen 16 und 18 bewirkt, die in
die Vertiefungen 12 benachbarter Steinlagen eingreifen.
Wie ein Vergleich der Figuren 5 und 6 erkennen läßt,
sind die $120^O$-Steine 10 der Steinlage nach Figur 5
gegenüber den $120^O$-Steinen 16 der Steinlage nach Figur 6
um $60^O$ versetzt, was in Figur 5 durch gestrichelte Eintragung der aneinanderstoßenden Stirnflächen der Steine
16 und 18 dar-gestellt ist. Darüber hinaus ist dieser
Versatz insbesondere auch aus den Figuren 8 und 9 erkennbar. Im übrigen z-eigt Figur 9 die beiden zueinander
parallelen Rohre 24 einschließlich ihrer Verkleidung in
einem Teilverlauf, der sich in horizontaler Richtung
erstreckt, wie es zum Beispiel bei Hubbalkenöfen der
Fall ist.

Wie weiterhin aus den Figuren 5 und 6 erkennbar, ist
die zu Isolierzwecken vorgesehene Schicht 25 im Bereich der Zwischensteine 22 ausgespart. Die Zwischenstücke
22 haben einen solchen Querschnitt, daß nach innen hin
im Bereich der hier mit der Bezugsziffer 27 bezeichneten Rohrachsenebene eine Fuge 28 freibleibt. An die
die Fuge 28 begrenzenden Seitenflächen der Zwischensteine 22 schließen Seitenflächen 29 in einem solchen
Winkel an, daß bei einer eventuellen Annäherung der
Rohre 24 Berührungspunkte 30 entstehen. Die Seitenflächen 29 verlaufen im Bereich der Berühungspunkte
30 etwa tangential zum Umfang der Rohre 24. Die Berührungspunkte 30 sind durch die Form der Zwischensteine 22 so
vorgegeben, daß die Berührung zwischen einem Rohr 24 und
einem Zwischenstein 22 innerhalb eines Winkelbereiches
von maximal 45$^{\circ}$ zu der Rohrachsenebene 27 stattfindet.
Durch eine Annäherung der Rohre 24 aneinander gegebenenfall bewirkte Beanspruchungen können also von den Zwischensteinen 22 unmittelbar in Form von Druckbeanspruchungen
aufgenommen werden, ohne daß die zugeordneten Halterungen
26 unzulässig belastet werden oder eventuell sogar eine
Belastung des Zwischensteins 22 im äußeren Umfangsbereich
der Rohrverkleidung auftritt. Durch die vorgegebene Lage
der Berührungspunkte 30 wird dies vermieden, denn sonst
könnten die Zwischensteine 22 und die an sie angrenzenden
Steine 10 oder 18 so stark zusammengedrückt werden, daß
Beschädigungen insbesondere im äußeren Umfangsbereich der Steine
auftreten.
Ferner ist die Höhe der Zwischensteine 22 so bemessen,
daß sie der Höhe eines Steines 10,16 oder 18 zwischen
jeweils zwei gegenüberliegenden Vertiefungen 12 bzw. 19
zuzüglich der Höhe eines der Anschläge 11 entspricht.
Hierdurch läßt sich in Umfangsrichtung im Bereich der
Zwischensteine ein Fugenverlauf erzielen, wie er in den
Figuren 7 und 8 erkennbar ist.

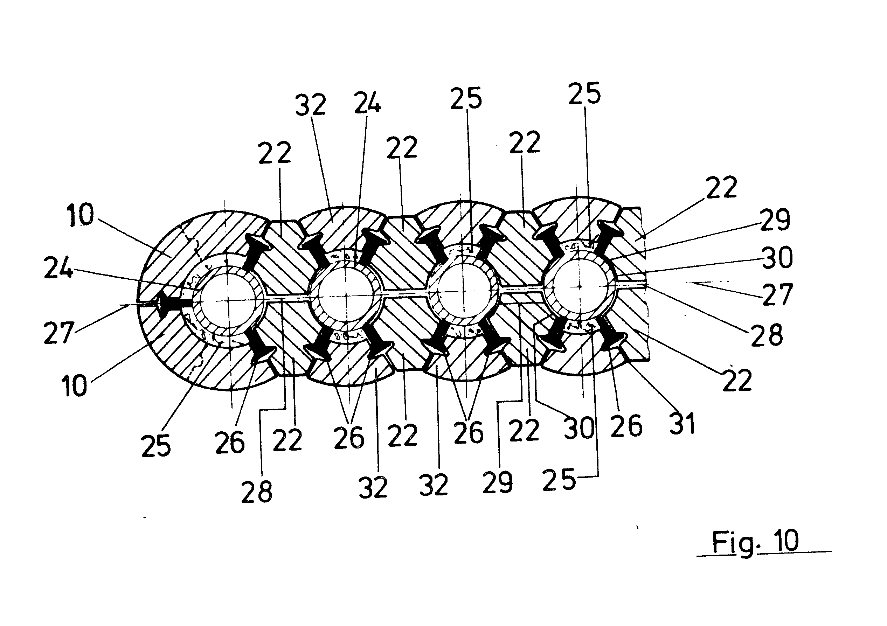

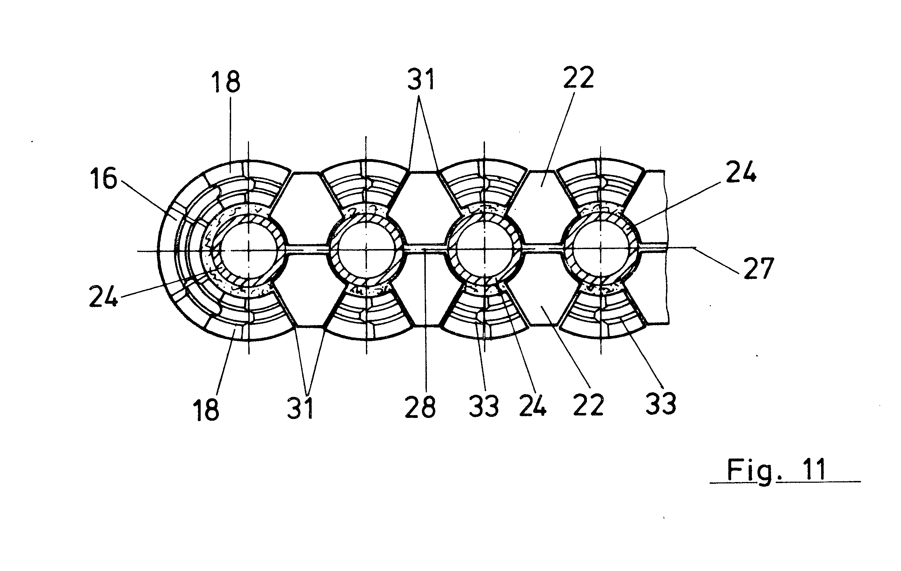

Die Figuren 10 und 11 zeigen die Form einer nach der
Erfindung ausgebildeten Rohrverkleidung für mehr als
zwei Rohre 24. Die Figuren 10 und 11 sind an der einen
Seite abgebrochen dargestellt um anzudeuten, daß die
Zahl der Rohre 24 beliebig sein kann.

Im Bereich der jeweils äußeren Rohre 24 werden wie auch
bei der zuvor beschriebenen Ausführungsform in der einen
Steinlage außer den Zwischensteinen 22 die $120^{\circ}$-Steine
10 und in der anderen Steinlage die $120^{\circ}$-Steine 16 zusammen mit den $60^{\circ}$-Steinen 18 verwendet. Gemeinsam ist
beiden Ausführungsformen ferner die Tatsache, daß zu
beiden Seiten der Zwischensteine 22 jeweils eine sich
parallel zu den Rohrachsen erstreckende Fuge 31 verläuft,
die gleichzeitig die Funktion einer Trennfuge und einer
Gleitfuge erfüllt und die jeweils eine Unterbrechung der
formschlüssigen Verriegelung zwischen benachbarten Steinen
in Umfangsrichtung darstellt.

Bei der in den Figuren 10 und 11 dargestellten Ausführungsform werden im Bereich der mittleren Rohre 24 jedoch $60^{\circ}$-Steine 32 und 33 verwendet, die eine andere
Form haben als der $60^{\circ}$-Stein 18. Der Stein 32 unterscheidet sich von dem Stein 18 dadurch, daß er an beiden Stirnseiten Fugen 15 aufweist, die zum Eingreifen
der Halterungen 26 dienen. Die Steine 32 lassen sich
dann an ihren jeweils mit einer Nut 14 und einer Feder 20 versehenen Seiten so aneinandersetzen, daß ein
Anschlag 11 abwechselnd einmal an dem rechten und einmal an dem linken Ende des Steins 32 liegt.

Dasselbe gilt auch für die Ausbildung eines Steines 33
mit der Ausnahme, daß dieser an seinen Stirnflächen keine Nuten 15 aufweist, sondern eben ist.

Bezüglich der Ausbildung und Anordnung der Nuten und
Federn sowie der Wahl eines bestimmten Bogenwinkel-Rasters
für die einzelnen Steinlängen gibt es zusätzlich zu der
hier beschriebenen Ausführungsform noch weitere Möglichkeiten. So können zum Beispiel die Steine 16 dahingehend
abgeändert werden, so daß sie nur an einer Stirnfläche
eine Feder 17 aufweisen, während die andere Stirnfläche
mit einer Nut 21 versehen ist. Die Form der Steine 18
ist dann entsprechend anzupassen. Es ist dann vielleicht
auch denkbar, daß ein 60$^{\circ}$-Stein mit der Hälfte eines
120$^{\circ}$-Steines identisch ist. Ferner kann die Bogenwinkellänge auch in Raster von 180$^{\circ}$ bzw. 90$^{\circ}$ aufgeteilt sein,
was insbesondere bei größeren Rohrdurchmessern zu Vorteilen führen kann. Im übrigen sind in Fig. 11, die
der Darstellung nach Figur 6 entspricht, die Federn 13
und die Nuten 14 zur Verbesserung der Übersichtlichkeit nur teilweise angedeutet.

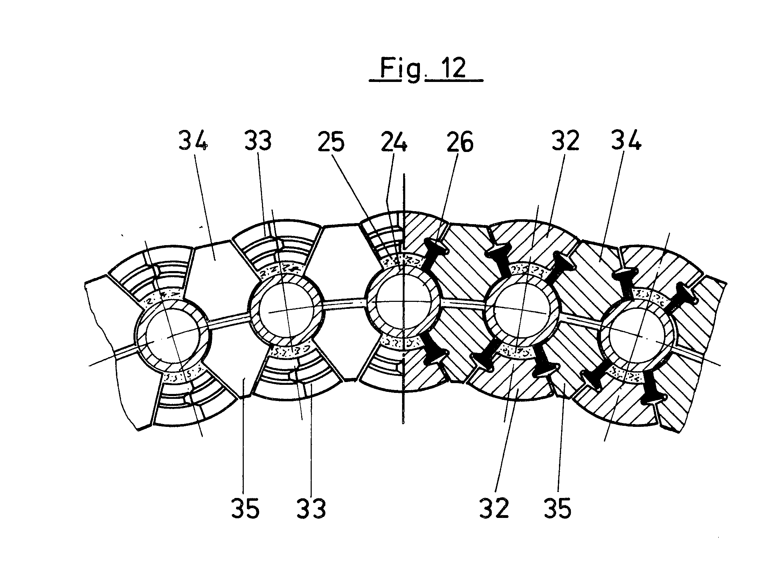

Wie Figur 12 erkennen läßt, ist die Erfindung auch bei
einer zumindest angenähert kreisbogenförmigen Anordnung der zueinander parallelen Rohre 24 mit Vorteil
anwendbar. Soweit mit den zuvor beschriebenen Ausführungsformen identische Teile Verwendung finden, sind
auch dieselben Bezugsziffern vorgesehen. Es sind jetzt
jedoch an der Außenseite und der Innenseite Zwischensteine 34 und 35 vorhanden, die jeweils einen unterschiedlichen Querschnitt haben. Die Querschnittsform
der Zwischensteine 34 und 35 ist so bemessen, daß die
sich durch den Krümmungsradius ergebenden unterschiedlichen Umfangslängen an der Außenseite und der Innenseite ausgeglichen werden können. Man kann also allein mit Hilfe der Zwischensteine 34 und 35 der Rohrverkleidung einen kreisbogenförmigen Verlauf geben, ohne
daß andere Steintypen verwendet werden müssen als bei
Anordnung der Rohre in einer Rohrachsenebene.

Wie im übrigen auch bereits bei den zuvor beschriebenen
Ausführungsformen ist eine zusätzliche Schicht 25 aus
geeignetem Isoliermaterial im Bereich der Zwischensteine 22 bzw. 34 und 35 nicht vorhanden. Die Rohre 24
werden im allgemeinen zwar mit einer verhältnismäßig
dünnen und deshalb in der Zeichnung nicht besonders
dargestellten Isolierlage versehen, z.B. also mit einem
Filzstreifen umwickelt sein. Eine zusätzliche Isolierschicht entsprechend der Schicht 25 fehlt jedoch im
Bereich der Zwischensteine 22 bzw. 34 und 35 deshalb,
weil die Zwischensteine als Distanzstück wirken und
bei einer eventuellen Annäherung der Rohre 24 aneinander
Druckbeanspruchungen aufnehmen sollen, um zu verhindern,
daß die Übertragung derartiger Beanspruchungen im
äußeren Steinbereich erfolgen muß. Letzteres könnte
zu Beschädigungen führen.

Es wurden bereits einige Anwendungsmöglichkeiten erwähnt, z.B. die Verwendung einer solchen Rohrverkleidung
für Wärmebehandlungsöfen. Die Rohre können hierbei von
einem geeigneten Kühlmedium durchströmt werden. Dieses
Kühlmedium kann gasförmig oder flüssig sein, z.B.
Luft, Dampf oder Wasser.

Eine weitere Anwendungsmöglichkeit ist überall dort
gegeben, wo die Wandung eines Feuerungsraumes oder eines
Reaktionsbehälters gekühlt werden soll. Wenn eine derartige

- 15 -

Rohrverkleidung z.B. bei Reaktionsbehältern die Auskleidung des Reaktionsraumes bildet, so ist mit einem
verhältnismäßig starken Verschleiß der Auskleidung
zu rechnen. Es ist dann besonders vorteilhaft, daß
sich eine nach der Erfindung aufgebaute Rohrverkleidung bzw. Auskleidung sehr einfach montieren läßt
und daß gegebenenfalls auch nur Teilbereiche, insbesondere an der Innenseite, bequem ausgewechselt werden können.

0036474

Bezugszeichenliste

10  Stein
11  Anschlag
12  Vertiefung
13  Feder
14  Nut
15  Nut
16  Stein
17  Feder
18  Stein
19  Vertiefung
20  Feder
21  Nut
22  Zwischenstein
23  Nut
24  Rohr
25  Schicht
26  Halterung
27  Rohrachsenebene
28  Fuge
29  Seitenfläche
30  Berührungspunkt
31  Fuge
32  Stein
33  Stein
34  Stein
35  Stein

A n s p r ü c h e :

1. Rohrverkleidung in Form eines Steinverbandes, der
   mindestens zwei zueinander parallel verlaufende Rohre
   umgibt und aus einzelnen Steinlagen aufgebaut ist,
   mit jeweils zwei Anschlägen und einer zwischen diesen ausgebildeten Vertiefung an den einer benachbarten Steinlage zugewandten Seiten eines Steines
   und mit einer formschlüssigen Verbindung zwischen
   den Steinen benachbarter Steinlagen derart, daß
   jeweils zwei Anschläge benachbarter Steine einer
   Steinlage in die Vertiefung eines Steins der benachbarten Steinlage eingreifen, wobei zumindest
   ein Teil der Steine in Umfangsrichtung einen bogenförmigen Verlauf hat, dadurch gekennzeichnet, daß
   zumindest ein Teil der Steine (10,22; 32) an den
   innerhalb einer Steinlage aneinandergrenzenden
   Stirnflächen jeweils eine Aussparung (15) aufweist,
   in die eine an dem jeweils zugeordneten Rohr (24) befestigte Halterung (26) eingreift, und daß die formschlüssige Verriegelung der Steine einer Steinlage in
Umfangsrichtung an mindestens einer Stelle unterbrochen
ist.

2. Rohrverkleidung nach Anspruch 1, dadurch gekennzeichnet,
daß sie in dem zwischen den Achsen benachbarter Rohre
(24) liegenden Bereich einen Zwischenstein (22) aufweist, daß der Zwischenstein (22) von zwei jeweils
an einem dieser Rohre (24) befestigten Halterungen (26)
gehalten ist und daß die formschlüssige Verriegelung
in Umfangsrichtung an mindestens einer Stirnseite des
Zwischensteines (22) unterbrochen ist.

3. Rohrverkleidung nach Anspruch 2, dadurch gekennzeichnet, daß durch die Unterbrechung der formschlüssigen
Verriegelung in Umfangsrichtung an mindestens einer
Seite eines Zwischensteines (22) eine benachbarte
Steinlagen durchsetzende Fuge (31) gebildet ist, die
parallel zu einer Rohrachse verläuft.

4. Rohrverkleidung nach einem der vorherigen Ansprüche,
dadurch gekennzeichnet, daß die zum Eingreifen der
Halterungen (26) dienenden Aussparungen an den Stirnseiten der Steine (10; 32) oder Zwischensteine (22)
durch durchgehende Nuten (15) gebildet sind, die parallel
zu einer Rohrachse verlaufen.

5. Rohrverkleidung nach einem der vorherigen Ansprüche,
dadurch gekennzeichnet, daß der Zwischenstein (22)
einen zumindest angenähert polygonalen Querschnitt
hat und in den zwischen zwei benachbarten Rohren
(24) liegenden Umfangsbereich hineinragt.

6. Rohrverkleidung nach Anspruch 5, dadurch gekennzeichnet, daß die Zwischensteine (22) nur soweit in den Umfangsbereich hineinragen, daß eine in der Rohrachsenebene (27) verlaufende Fuge (28) freibleibt.

7. Rohrverkleidung nach Anspruch 5 oder 6, dadurch gekennzeichnet, daß der in den Umfangsbereich zwischen benachbarten Rohren (24) hineinreichende Teil des Zwischensteins (22) so bemessen ist, daß dieser Teil bei einer Annäherung der Rohre (24) aneinander als Distanzstück wirkt.

8. Rohrverkleidung nach Anspruch 7, dadurch gekennzeichnet, daß dieser Teil des Zwischensteines (22) so geformt ist, daß bei einer Annäherung der Rohre (24) aneinander die Berührungspunkte (30) zwischen Rohr (24) und Zwischenstein (22) jeweils im Bereich eines Winkels von maximal 45 Grad zu der Rohrachsenebene (27) liegen.

9. Rohrverkleidung nach einem der vorherigen Ansprüche, dadurch gekennzeichnet, daß ein Zwischenstein (22) in der parallel zu einer Rohrachse verlaufenden Richtung so lang bemessen ist, wie es der Höhe eines Steines (10) zwischen den Vertiefungen (12) zuzüglich der Höhe eines Anschlags (11) entspricht.

10. Rohrverkleidung nach einem der vorherigen Ansprüche, dadurch gekennzeichnet, daß nur in einigen der Steinlagen Steine (10, 22; 32) durch an den Rohren (24) befestigte Halterungen (26) gehalten sind.

11. Rohrverkleidung nach einem der vorherigen Ansprüche, dadurch gekennzeichnet, daß die mit Anschlägen (11) und Vertiefungen (12) versehenen Steinseiten Vorsprünge
(13) und Nuten (14) aufweisen, die in radialer Richtung eine formschlüssige Verriegelung bewirken.

12. Rohrverkleidung nach einem der vorherigen Ansprüche,
dadurch gekennzeichnet, daß die Halterungen (26) jeweils die Form eines mit einem Kopf versehenen Bolzens oder eines am Ende umgebogenen Steges haben.

13. Rohrverkleidung nach Anspruch 12, dadurch gekennzeichnet, daß der Steg an seinem Ende geschlitzt und
in zwei diametral entgegengesetzten Richtungen umgebogen ist.

14. Rohrverkleidung nach einem der vorherigen Ansprüche,
dadurch gekennzeichnet. daß in einer Steinlage außer
den Zwischensteinen (22) nur Steine (16,18) mit zwei
unterschiedlichen Bogenwinkel-Längen vorhanden sind
und daß der längere Stein (16) doppelt so lang ist
wie der kürzere Stein (18).

15. Rohrverkleidung nach einem der vorherigen Ansprüche,
dadurch gekennzeichnet, daß bei zumindest angenähert kreisbogenförmiger Anordnung der zueinander
parallelen Rohre (24) Zwischensteine (34,35) unterschiedlichen Querschnitts vorgesehen sind.

Fig. 1

14  11          12    13          11    14

Fig. 2

17                    16                    17

14    11        12        11        14

2/10

0036474

11   14   19

20

21

18

Fig. 3

14   11

3/10

0036474

Fig. 4

0036474

Fig. 5

31 29 26
24 22 30
10 10
27 25
25 27
10 10
26 28 26 24 26
22 29

5/10

0036474

Fig. 6

17, 21
16
24
27
25

18
31

22
28

31

18
14
11

13
16
27
12
11

17, 21

18
31

22
29

30

18

6/10

0036474

Fig. 7

Fig. 9

Fig. 8

Fig. 10

Fig. 11

18  31  22  16  24  27

18  31  28  33  24  22  33

0036474

01/6

## Fig. 12

34  33  25  24  26  32  34

35  33  32  35

0036474